# EUROPEAN PATENT APPLICATION

(11) **EP 3 153 027 A1**
(43) Date of publication of application: **12.04.2017**
(21) Application number: 15382530.2
(22) Date of filing: 28.10.2015
(51) Int. Cl.: A23B 7/154, A01F 25/14, B65B 25/04, B65D 75/00

(54) **BAG FOR PACKAGE HORTICULTURAL PRODUCTS**

(30) Priority: 09.10.2015 MX 2015014304
(71) Applicant: Camen Quimica, S.A. de C.V., 09310 Iztapalapa (MX)
(72) Inventor: GARCIA MENA, Eduardo Alberto, 09310 IZTAPALAPA (MX)
(74) Representative: Urizar Anasagasti, Jesus Maria

(57) **Abstract**

A bag for package of horticultural products with the object of maximize the freshness, controlling the steam, carbon dioxide, ethylene gas absorption and allowing the oxygen permeation, ensuring fresh fruits and vegetables from post harvest until reaching the final consumer.

The storage bag of horticultural products of this invention consists of a back part composed of Tyvek® 4058B and a transparent front as well as a base, consisting of a combination of a plastic film of a low density polymer and Cel-Span® EG-600 plus joined by extrusion lamination.

## Description

### OBJECT OF THE INVENTION

This invention is regarding to a bag of a tight package for preserving the horticultural products, whose purpose is to extend the freshness even without refrigeration.

The package bag object of this invention is used in the packing industry of perishables which allows maximizing freshness, controls the steam, carbon dioxide; ethylene gas absorption and allows the oxygen permeation, ensuring fresh fruits and vegetables from post harvest until reaching the final consumer. This invention contains elements that while exist in the art, it corrects certain deficiencies in the traditional package and provides control in the movement of gases and moisture from inside the package, optimizing the capacity of porosity and barrier against micro-organisms, giving a pleasing presentation to the final consumer.

### BACKGROUND OF THE INVENTION

Horticultural products are staple foods (fruits and vegetables) in the human diet, but have the disadvantage of being perishable, either endogenous cause (enzyme reactions) or by external factors (physical and chemical agents); therefore they are available for short periods of time after harvest.

Packaging techniques used for horticultural products after harvest, have the purpose of preserve the overall quality (organoleptic, commercial, microbiological and nutritious) thereof, being essential use a package that maximizes freshness.

Even in the post-harvest the fruits and vegetables continue breathing for obtaining energy from its own reserves of starch, sugar and other metabolites; therefore breathing consist of decomposing by oxidation of the sugars, starches and fatty acids to simpler molecules, including, but not limited to carbon dioxide and water, with a release of energy which produces heat which must be dissipated in some way, otherwise the fruit or vegetable will be heated and in consequence the breathing will be stimulated even more.

Likewise the temperature directly affects on the breathing since if the temperature increases also the breathing speed increases, generating a higher quantity of heat resulting in fermentation and degradation reactions of the tissue texture; it is for that reason that to higher temperature, the ethylene production and the breathing speed increase. Associated to the temperature other atmospheric variable which affects the useful life is the relative humidity. If the relative humidity is too low, the damage is produced in transpiration, i.e., while increase the temperature, the product removes the heat as steam, causing loss of weight; which is translated in a loss of turgidity, which provokes the increase of breathing. On the contrary if the relative humidity is high, the humidity may condense in the products (fruits and vegetables), this produces favorable conditions for the microbial growth due to the presence of free water stimulating the growth of opportunistic bacteria and fungi, which results in the deterioration of the fruit or vegetable.

Therefore, moisture control is a factor that must be controlled by ventilation conditions and permeability, however if these conditions are bad, can be reached anaerobic conditions with the formation of ethanol, acetaldehyde or other organic compounds associated with odors and undesirable quality. During the fruit breathing a gaseous compound called ethylene (growth hormone) is formed. This compound accelerates the ripening process, therefore it is necessary to prevent its accumulation through ventilation, in order to increase the shelf life of the fruits, it is well known that the production or presence of ethylene is directly proportional to the speed of breathing, where to higher ethylene increases the breathing, maturation, and thus, accelerates the metabolism disintegrating the chlorophyll of the perishable products.

Another problem associated with uncontrolled breathing constitutes reaching a high concentration of carbon dioxide in the inner atmosphere of the package, affecting the organoleptic properties of the perishable product.

It is known that most products (fruits and vegetables) are typically tolerant of levels of carbon dioxide to about 5-10 percent and tolerant of oxygen levels as low as about 1-5 percent.

Therefore the postharvest decay of fruit and vegetables due to the effect of gases and vapors, generating microbial growth (*Clostridium botulinum, Rhizopus, Penicillium, Mucor, Monilia, Botrytis, Phomosis, Trichoderm Phytophthora, anthracnose, Diplodia, Phoma, etc..*), affecting the color, flavor, odor and texture of the perishable product, even more such decay results in post-harvest losses increasing costs throughout the distribution chain generating losses.

In the art, there is a large number of bags for package of perishable products, however due to the nature of these bags, they face a number of difficulties to prolong the freshness of fruit and vegetables, since it is evident that the cold chain in the distribution chain is a constraint for the management of the product as well as a manufacturing process involving generation of expenses and recourses which can be simplified in a number of practical steps as provided herein.

In the packaging industry of fruits and vegetables still the need for a bag keeping the conditions of relative humidity in the range of 80% less than about 100% to prevent wilting while controlling the ethylene gas absorption allowing oxygen permeation and minimizing the condensation of water droplets, to avoid promoting microbial decomposition.

In the prior art we found the US Patent 4, 061, 785, disclosing a product incorporating an anti-fungal or anti-bacterial pesticide in the packing material to inhibit the decay. Although this system can be scientifically effective in some cases, public concern about the use of pesticides in such proximity with edible food makes this option unacceptable. In fact, long-term effects of a product of this type are essentially unknown.

US Patent 4,886,37 discloses a plastic bag for storing fruits and vegetables with micro-perforations, providing slots in a type-mesh bag, it does not address the moisture or weight loss of the horticultural products, likewise it does not provide protection from contaminants, and the product comes into deteriorated condition to the customer.

The patent CN102096731 relates to a plastic film bag for a packaging system of modified atmosphere with a low concentration of O₂ and high concentration of CO₂ to inhibit the breathing of fruits and vegetables. While this invention allows that the metabolic processes be delayed, it increases the costs of packaging, uses temperature control and requires formulations of specific gases for each horticultural product, besides the benefits are lost once that the package is opened; it is important to mention that if the O₂ levels are low, there may be anaerobic respiration and occur bad odors due to the accumulation of ethanol and acetaldehyde.

Unlike all traditional bags for package of horticultural products made from plastic films: the present invention does not require the addition of pesticides or carbon dioxide as the case of *controlled atmospheres*; it does not require antimicrobial agents or alternatively holes (mesh bags) for allowing the permeation of oxygen, since it is structurally adapted for allowing permeation of oxygen, balancing gases, controlling the steam and regulating the presence or ethylene production thanks to the porosity of the plastic film it achieves a controlled atmosphere without the need for refrigeration and also acts as antimicrobial barrier.

### BRIEF DESCRIPTION OF THE FIGURES

The accompanying figures are included for providing a better understanding of the invention and they are incorporated and constitute part of this disclosing. The figures illustrate the embodiments of the invention and together with the description they are useful for explaining the principles of the invention.

Fig. 1 illustrates a front (1) view of the bag for package of horticultural products, as well as the base portion (3) in accordance with an embodiment of this invention.

Fig. 2 illustrates a cross view of the back (2), as well as the nozzle (4) of the bag for package of horticultural products, in accordance with an embodiment of this invention.

### DETAILED DESCRIPTION OF THE INVENTION

It will be made reference in detail to the embodiments of this invention; the examples are illustrated by the accompanying drawings. Wherever possible, the same reference numbers in the drawings and the description to refer to the same parts are used.

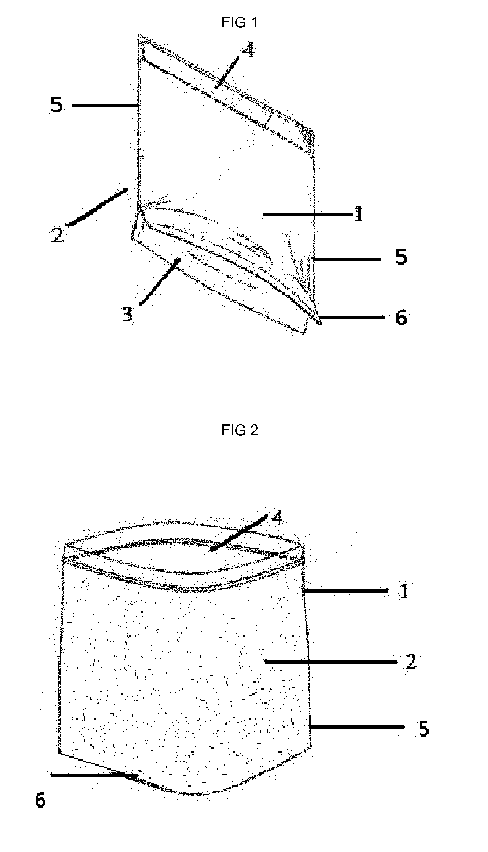

Fig. 1 illustrates the permeable transparent front (1) of the bag for Packaged of horticultural products, as well as the base portion (3) in accordance with an embodiment of this invention, which consists of:
- A combination of thermoplastic material of low density and the additive Gaia® Fresh EG-600 plus.

For the object of this invention, the term Gaia®Fresh EG-600 plus is understood that is an additive controlling the ripening process, absorbing and removing the ethylene, i.e. the ripening hormone, transforming it into carbon dioxide, allowing slowing down the breathing of the horticultural products, i.e. extend the freshness, keeping its organoleptic characteristics, ensuring a steam control and oxygen permeation in fruits and vegetables. Prepared based on polyethylene of high density, free of halogens, approved by the FDA for using it as slip agent in the production of articles whose final use would be contact with food in compliance with the US FDA 21 CFR 177.20 with a density of 9.55 g/cc. It is important to mention that the use of the additive Gaia® Fresh EG-600 plus improve the sliding properties with the polymer of low density, besides it reduces the scratch resistance, improving the stability of the transparent front (1) and the static friction coefficient.

Fig. 2 illustrates the back (2) of the bag for package of horticultural products in accordance with an embodiment of this invention, which consists of:
- A polymer of high density (Tyvek® 4058B) as protective membrane of microorganisms.

It will be understood by Tyvek® 4058B as a non-woven based on continuous fibers and very thin of 100 percent of polyethylene of high density which are randomly distributed and not directionally. It removes the static generation. With neutral pH. Trapping the micro-organisms among its fibers, i.e., it resists the penetration of bacterial spores and other micro-organism contaminating; it controls the heat, air and humidity flow (steam), partial pressures and conductivity, therefore it creates a structure thermally efficient that allows breathability, allowing the quick removal of the condensation and thus it balances quickly the pressure changes, for maintaining a high performance of a cool climate inside.

With regard to the permeability data of such Tyvek material there are reports of Air permeation of 4.55 cc/s in² and oxygen permeability of 0.95 cc/sin².

It has a high resistance of highest weight than the paper, overlapping

It has a high resistance heavier than paper, overcoming transportation challenges in terms of toughness, being resistant to scratches or perforations, being smooth as silk, with technology that overcomes the advantages of the paper, plastic film and fabric.

By virtue of an aging study, any change is showed in the microbial barrier properties, after enduring extreme conditions, since it absorbs or no moisture. Such Tyvek® 4058B is friendly to the environment, because in case of fire it does not emit dangerous gases, fulfilling with FDA standards.

It consists of a top layer with sealant, with a melting point of 130 °C.

Fig. 1 and Fig. 2 illustrate the nozzle of the bag for package of horticultural products, which is provided with a conventional mechanism to maintain in a resealable closed configuration. Examples of such configurations include, Dow Chemical Co. Ziploc®, fastener mechanisms of the trademark VELCRO®, Figure 2.

It is important to mention that the nozzle (4) of the bag has a hermetic seal for a fastening element with type-zipper fastener adhered by heat-sealing to the opening, wherein the lock type-zipper fastener is adapted to allow a secure fastener and tight seal of the bag.

As it was indicated above, the invention resides in the discovery of the application of a combination of a thermoplastic material, i.e., a low density polymer with the additive Cel-Span® EG-600 plus, formulated solely on the transparent front (1) and the base (3) of the resealable bag for: control of ethylene gas, control of steam and oxygen permeation, besides the back (2) comprises a polymer of high density (Tyvek® 4058B) as protective membrane against microorganisms.

For the above the combination of the transparent front (1), the back (2) and the base (3), gives as a result a reseleable packing bag for extending the ripen of the fruits and vegetables. Figure 1 and 2.

The fundamental procedure for obtaining the bag for package of horticultural products will involve the following steps which are listed below:
a) Mixture of a low density polymer and the additive Cel-Span® EG-600 plus (added from the 3% to 4%).
b) Extrusion lamination from 120ºC to 140ºC
c) Cut of extruded sheets of the transparent front (1) and the base (3).
d) Flexographic printing of the logo
e) Direct heat thermo-sealing of the type-zipper fastener to the nozzle (4) of the transparent front face (1) and the back (3).
f) Inner thermo-sealing of the lateral side (5) from the transparent front (1) to the lateral side (5) of the base (3).
g) Inner thermo-sealing of the lateral side (6) from the back (2) to the lateral side (6) of the transparent front (1) and to the lateral side of the base (3).

The technical specifications of the bag regarding to the transparent front (1) and the base have a thickness from 0.04 mm to 0.7 mm, whereas for the back has a thickness from 0.14 mm to 0.2 mm.

Likewise the front face printing (1) is performed by flexography process, where can be applied up to 10 solvent-free inks and free of heavy metals.

It should be mentioned that with the back film (2) Tyvek, the costs of manufacturing of the packaging bag are drastically reduced , since the inner thermo-sealing film of the lateral sides (5) and (6), no longer requires special adhesives.

Bag for storage of horticultural products can be developed based on customer needs.

It will be apparent to those skilled in the art that various modifications and variations to the structure of the present invention may be made without departing from the scope and spirit thereof. In view of the foregoing, it is intended that the present invention cover the modifications and variations thereof since they are within the scope of the following claims and their equivalents.

## Claims

1. A bag for package of horticultural products comprising:
- A transparent front
- A back
- A base
- A nozzle with type-zipper fastener.
wherein the transparent front and the base have a combination of a thermo-plastic film of low density and an additive Cel-Span® EG-600 plus which is added from 3% to 4%, in which such combination is obtained by extrusion lamination, with a thickness from 0.04 mm to 0.7 mm and it may be printed.

2. A bag for package of horticultural products according to claim 1, wherein the thermo-plastic film of the transparent front and the base is a polymer of low density.

3. A bag for package of horticultural products according to claim 1, wherein further the back consists of a Tyvek® 4058B material with a thickness from 0.14 mm to 0.21 mm.

4. A bag for package of horticultural products according to claim 1, wherein the lateral side of the back for the inner sealing to the transparent front does not require adhesive.

5. A bag for package of horticultural products according to claim 1, wherein the closure of the nozzle is by a type-zipper fastener.
